# EUROPEAN PATENT SPECIFICATION

(11) **EP 1 488 624 B1**
(45) Date of publication and mention of the grant of the patent: **22.03.2006**
(21) Application number: 02789110.0
(22) Date of filing: 25.11.2002
(51) Int. Cl.: H04M 3/56, H04Q 7/22, H04Q 7/38

(54) **GLOBALLY UNIQUE IDENTIFICATION OF GROUPS OF USERS IN A COMMUNICATIONS SYSTEM**
GLOBAL EINDEUTIGE IDENTIFIKATION VON BENUTZERGRUPPEN IN EINEM KOMMUNIKATIONSSYSTEM
IDENTIFICATION MONDIALEMENT UNIQUE DE GROUPES D'UTILISATEURS DANS UN SYSTEME DE TELECOMMUNICATIONS

(30) Priority: 22.03.2002 SE 0200893
(43) Date of publication of application: 22.12.2004
(73) Proprietor: TELEFONAKTIEBOLAGET LM ERICSSON (publ), 164 83 Stockholm (SE)
(72) Inventor: HÄGER, Hanz, S-167 40 Bromma (SE)
(74) Representative: Norin, Klas
(86) International application number: PCT/SE2002/002167
(87) International publication number: WO 2003/081887

(56) References cited:
- EP-A1- 1 164 774
- WO-A1-02/17607
- WO-A1-02/060199
- US-B1- 6 289 223

## Description

### Technical Field

The present invention relates to a method for transmitting a message to a group of users in a communications network, a memory means for use in a communications network and a node for transmitting a message to a group of users in a communications network.

### Background

Messaging services are a growing part of telecommunications services. In particular the use of the Short Message Service (SMS) in mobile networks is increasing.

It is possible to define a group of subscribers that are to receive the same message and specify one address for the group. Any message addressed to this group will then be sent to all subscribers belonging to the group. The group address will be used as the sender. In this way, for example, a chat service in a messaging network can be implemented, for example SMS chat or MMS.

Voice conferences on telephone lines and video conferences where two ore more parties communicate in a communication session involving voice and/or images are other types of group communication that have become increasingly important.

Group communication requires that the sender always specifies the group name in the message or that the number used when sending the message is a unique number that is only used for this group. In the case of SMS the group must be identified by an MSISDN number.

One solution for sending SMS messages to a group of subscribers is disclosed in WO94/09599. This document is primarily concerned with distributing the message and presents a solution where the message is copied to all members of the receiving group. Addressing is discussed in connection with Fig. 5. A unique identifier is assigned to each group. A database in the network associates the identifier of each group with the MSISDN numbers of all subscribers that are part of this group.

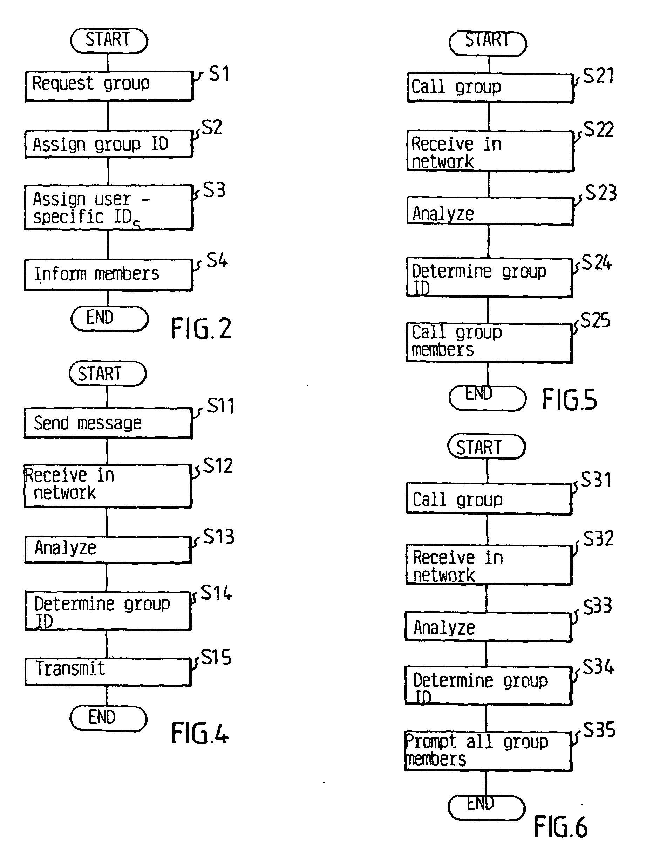

US 6 289 223 describes a similar solution for addressing group messages in SMS. Receiver groups are defined and a unique identifier is assigned to each group. In Figure 2 this group identifier is an MSISDN number.

GB 2 327 571 describes an addressing method for sending SMS messages to a group of receivers. A set of group identifiers is assigned to each subscriber. To send an SMS message to a group of subscribers the address is composed of two parts: a first identifier signifying that the message is intended for a group and an identifier of the group.

EP 1 164 774 discloses an apparatus for facilitating mobile teleconference.

All of these solutions involve a unique number identifying each group. As a result the total number of groups will be limited by the number plan. To enable a sufficient number of groups the group identifiers will have to be very long. This solution is also expensive, since keeping a number globally accessible involves a cost and is normally subject to a subscription fee. For example the MSISDN numbers used for SMS are limited in numbers.

### Object of the Invention

It is an object of the present invention to achieve a method and an apparatus for group messaging which enables an unlimited number of group identifiers both in messaging and communication sessions.

### Summary of the Invention

This object is achieved according to the invention by a method of initiating communication in a communications network from a first user in the network to a first group of users in the network, said first user being identified by a unique user identifier and each group being associated with a unique identifier and a user-specific identifier for each user associated with the group, said method comprising the following steps:
- initiating, by a first user, communication with a first predefined group of users by transmitting a first user-specific group identifier for the first predefined group to the network;
- determining, in the network, the unique identifier of the first group based on the first user-specific identifier and the unique user identifier,
- initiating communication with at least one member of the first group.
   The object is also achieved by a memory means for use in a communications network in which at least one group of users has been defined, said memory means comprising
- a unique group identifier for the group
- a user-specific group identifier for each user belonging to the group
- a user identity for each user,
- said unique group identifier, said user-specifc group identifier and said user identity being associated in such a way that the unique group identity can be determined on the basis of the user identity and the user-specific group identifier.

The object is also achieved according to the invention by a group management unit for achieving group communication in a communications network in which at least one group of users has been defined, said node comprising or being connectable to a memory means as defined above, said node comprising
- receiving means for receiving a communication request for communication with a first predefined group of users, said request comprising a user-specific group identifier for the first group from a sending user,
- identity means for determining the user identity of the sending user
- group identification means for determining the unique group identification based on the user-specific group identifier and the user identity
- transmitting means for initiating communication with at least one member of said group.

This solution enables globally unique identification of each group without the need for allocating a unique identifier for each group in the global number plan. The method according to the invention functions globally and is not limited to one operator. The number of group identifiers can be limited to essentially the maximum number of groups to which one user belongs. Therefore, an operator, service provider or similar can provide groups at a lower cost for each group, thereby eliminating the need for a subscription fee for each group. Because of this, groups can be established easily by each user without the need for a separate subscription for each group.

From a user perspective this means that the user has one address for each group, which is used to address the whole group. Each member of the group has an address for the group, but not necessarily the same address. The address is specific to each user. Since only a very limited number of group identifiers are needed the group identifiers can be kept short and simple.

A group association means, such as a database, holds the associations between users and their group addresses. Each group has its internal identity that is not seen outside the group association means but only used to keep the associations. The group association means keeps the group associations, the different addresses to the members of the groups and their personal group addresses in a table of group associations.

Preferably, the communication with the first predefined group of users is initiated by the first user sending a message intended for the first predefined group of users, said message being addressed to the first user-specific group identifier. Said message may comprise any type of information, for example a prompt to the recipient to connect to a conference call.

Alternatively, the communication with the first predefined group of users may be initiated by the first user making a call to the first user-specific group identifier. The call to the first user-specific group identifier may be branched in the network to a conference call involving at least three users associated with the group.

In the group management unit the receiving means is preferably arranged to receive a message addressed to the user-specific group identifier and the transmitting means is arranged to transmit said message to at least one member of the first group. The transmitting means may be arranged to return the message to the mobile exchange for forwarding to the at least one member of said group.

Alternatively, the receiving means may be arranged to receive call set-up request to the user-specific group identifier and the transmitting means is arranged to arrange a call to at least one member of the first group.

In another embodiment the receiving means is arranged to receive call set-up request to the user-specific group identifier and the transmitting means is arranged to prompt at least one member of the first group to participate in the group communication.

The solution according to the invention can be used with SMS and MMS messages but also to establish telephone conferences within a group.

Further, the algorithm for selecting the numbers can be enhanced so that the numbers used are better spread over the range of allocated group numbers.

The method and apparatus according to the invention makes it possible to have an SMS group chat service for millions of groups by using a small number of group identities. They also enable the establishment of group conferences by using the inventive address translation feature.

### Brief Description of the Drawings

The present invention will be described in more detail in the following, with reference to the appended drawings, in which:
Figure 1 shows an example involving six groups of subscribers
Figure 2 is a flow chart of how a group may be created according to the invention
Figure 3 shows a telecommunications network in which the invention may be implemented
Figure 4 is a flow chart of how to send messages to a group according to the invention
Figure 5 shows the steps carried out when a user establishes a group connection to a group defined in the network, according to a first embodiment
Figure 6 shows the steps carried out when a user establishes a group connection to a group defined in the network, according to a first embodiment

### Detailed Description of Embodiments

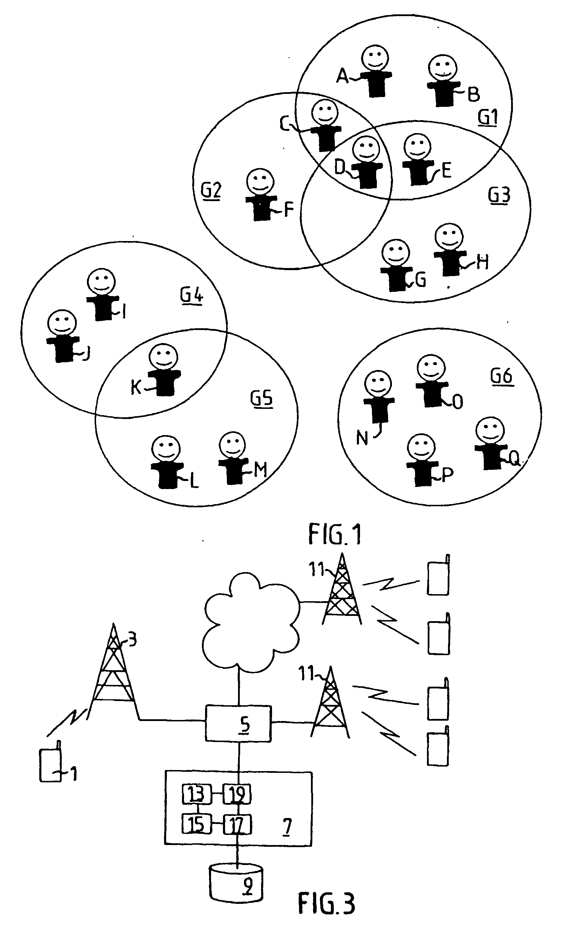

Figure 1 shows an example of a telecommunications system involving 17 subscribers A - Q. Each subscriber belongs to one or more of six groups G1-G6. Subscribers A and B only belong to group G1. Subscriber F only belongs to group G2. Subscribers G and H only belong to group G3. Subscriber C belongs to groups G1 and G2, subscriber E belongs to groups G1 and G3 and subscriber D belongs to groups G1, G2 and G3.

Subscribers I and J belong to group G4, subscribers L and M belong to group G5 and subscriber K belongs to both G4 and G5. Subscribers N, O, P and Q only belong to group G6.

G1-G6 are popular names used by the members to identify the groups. These names are optional, and may be selected to describe the group, for example, "project group X" or "members of club Y". Each subscriber A-Q is identified by a unique address A-Q. The actual format of the address might vary depending on the type of system. In the case of SMS these addresses would be unique E.164 (telephone numbers).

According to the invention, for each member of a group a number is associated with the group. This user-specific group identifier is used together with the number identifying the user (A number) to obtain a unique identifier for the group. The message can then be sent to the group identified by the unique identifier.

Table 1 is an example of how the associations for all users and groups shown in Figure 1 might be stored in a table. The group identification is a unique identifier for the group, used only in the database. The popular name is an optional name used to help the users select the right group. In this simplified example, the popular name is GI-G6. The A number is the sender's address and the B number is the group address valid for the particular sender.

**Table 1**

| **Group identification** | **Popular name** | **A-number** | **B-number** |
|---|---|---|---|
| 1 | G1 | A | 1 |
| 1 | G1 | B | 1 |
| 1 | G1 | C | 1 |
| 1 | G1 | D | 1 |
| 1 | G1 | E | 1 |
| 2 | G2 | C | 2 |
| 2 | G2 | D | 2 |
| 2 | G2 | F | 1 |
| 3 | G3 | D | 3 |
| 3 | G3 | E | 2 |
| 3 | G3 | G | 1 |
| 3 | G3 | H | 1 |
| 4 | G4 | I | 1 |
| 4 | G4 | J | 1 |
| 4 | G4 | K | 1 |
| 5 | G5 | K | 2 |
| 5 | G5 | L | 1 |
| 5 | G5 | M | 1 |
| 6 | G6 | N | 1 |
| 6 | G6 | O | 1 |
| 6 | G6 | P | 1 |
| 6 | G6 | Q | 1 |

The users' addresses (A-numbers) would typically be telephone numbers such as E.164 addresses. The group numbers (B-numbers) would typically be selected from a small range of E.164 addresses allocated for group identification.

Translating the A-numbers A-Q and the B-numbers used in table 1, into E. 164 addresses, the result would be as shown in table 2. The addresses A to Q are assumed to translate as +33 6 75 07 00 01 - +33 6 75 07 00 17 and the the numbers +33 1 10 00 00 01 - +33 1 10 00 00 03 are used as group numbers.

**Table 2**

| **Group identification** | **Popular name** | **A-number** | **B-number** |
|---|---|---|---|
| 1 | G1 | +33 6 75 07 00 01 | +33 1 10 00 01 |
| 1 | G1 | +33 6 75 07 00 02 | +33 1 10 00 01 |
| 1 | G1 | +33 6 75 07 00 03 | +33 1 10 00 01 |
| 1 | G1 | +33 6 75 07 00 04 | +33 1 10 00 01 |
| 1 | G1 | +33 6 75 07 00 05 | +33 1 10 00 01 |
| 2 | G2 | +33 6 75 07 00 03 | +33 1 10 00 02 |
| 2 | G2 | +33 6 75 07 00 04 | +33 1 10 00 02 |
| 2 | G2 | +33 6 75 07 00 06 | +33 1 10 00 01 |
| 3 | G3 | +33 6 75 07 00 04 | +33 1 10 00 03 |
| 3 | G3 | +33 6 75 07 00 05 | +33 1 10 00 02 |
| 3 | G3 | +33 6 75 07 00 07 | +33 1 10 00 01 |
| 3 | G3 | +33 6 75 07 00 08 | +33 1 10 00 01 |
| 4 | G4 | +33 6 75 07 00 09 | +33 1 10 00 01 |
| 4 | G4 | +33 6 75 07 00 10 | +33 1 10 00 01 |
| 4 | G4 | +33 6 75 07 00 11 | +33 1 10 00 01 |
| 5 | G5 | +33 6 75 07 00 11 | +33 1 10 00 02 |
| 5 | G5 | +33 6 75 07 00 12 | +33 1 10 00 01 |
| 5 | G5 | +33 6 75 07 00 13 | +33 1 10 00 01 |
| 6 | G6 | +33 6 75 07 00 14 | +33 1 10 00 01 |
| 6 | G6 | +33 6 75 07 00 15 | +33 1 10 00 01 |
| 6 | G6 | +33 6 75 07 00 16 | +33 1 10 00 01 |
| 6 | G6 | +33 6 75 07 00 17 | +33 1 10 00 01 |

As can be seen, only three different numbers are needed to address six different groups. Even with millions of users, and millions of groups, the number of group addresses needed would never exceed the number of groups one person could belong to. Therefore, only a few numbers would be needed to identify the groups.

In tables I and 2 it would be possible to other columns comprising other information. For example, an additional column could be used to indicate that a user is passively associated with a group. The user could then have a user-specific group identifier for this group, but not receive messages or invitations to participate in group communication intended for this group.

According to one embodiment of the invention, a group may be established according to the following procedure, illustrated in Figure 2:
- Step S1:: A user requests the establishment of a group, specifying the group members. This may be initiated in a number of different ways. For example, the user can send an SMS or an e-mail specifying the group members to a group server responsible for setting up the group. The group server extracts the information from the SMS or e-mail and confirms to the the user that the group has been established. Alternatively, the user may be allowed to set up the group himself, for example in a web application.
The user may also be allowed to specify a popular name for the group, for example, Project1 or Family.
- Step S2:: The group server assigns a unique group identification to the group.
- Step S3:: The group server checks the members and assigns a group number for each member. Members who are not previously members of any group get the first number of the ones allocated as group numbers as a group identifier for this group. If some members are already members of other groups the operator assigns different B-numbers to different group members in dependence of the number of groups they belong to already.
- Step S4:: When the group server has assigned B-numbers for all group members, it sends information to each group member about the B-number assigned to the group for this particular group member. Each group member should also be invited at this stage to accept or reject membership. This can be implemented as an opt-in or opt-out procedure. The information can be sent to each member in such a way as to facilitate the entering of the information in his/her address book.

The users can then start to use the group number (B-number) for calling the other members for a conference call or for sending SMS or MMS to the other members of the group. The procedure of contacting the other members is similar to making a regular call or sending an SMS to only one person and will be discussed in connection with Figure 4.

In step S1, a user may also be allowed to establish a group by calling an operator and specifying the group members orally, although this is of course more expensive than the automated solution. A method enabling the group server or operator to ascertain the user's identity is preferable. Therefore, the method of sending an SMS is preferred to the method of sending an e-mail, since it is normally not possible to determine the true originator of an e-mail.

Figure 3 illustrates a mobile telecommunications network in which the invention has been implemented. The network is simplified. In a real network other units than the ones shown will also be present. As an example, assume a first user C, identical to user C in Figure 1, who wishes to send an SMS to group G2, that is, to users D and F. This user C belongs to group G1 and G2. According to the invention, as seen from table 2, the user C therefore sends an SMS to G2 by sending the SMS to the address +33 1 10 00 00 02. The SMS is received in a first base station 3 and transmitted to a mobile exchange 5. In the mobile exchange 5 an analysis is performed to see to whom the message should be sent. If the message is identified as a group message, the mobile exchange 5 forwards the message to a group management unit 7, which is responsible for determining to which group the message should be sent. The group management unit 7 requests information from a database 9, which includes information as discussed in connection with table 2. The group management unit 7 determines, based on the number of subscriber C, i.e. +33 6 75 07 00 03 and the number entered in the address field, i.e. +33 1 10 00 00 02, that the message is to be transmitted to the group G2. The message is then returned to the mobile exchange 5 and transmitted, through the first base station 3 and/or other base stations 11, present in the network, to the other members of group G2, that is, to users D and F in Fig. 1.

To perform the functions according to the invention the group management unit 7 comprises the following units:
Receiving means 13 for receiving the message that is to be sent to a group.
Identity means 15 for determining the user identity of the sending user (A number). This can be done by A-number analysis, which is a well-known method.
Group identification means 17 for determining the unique group identification based on the user-specific group identifier and the user identity. The group identification means obtains this information from the memory means 9. The group identification means also comprises transmitting means 19 for transmitting the message to the members of the group. The message can be forwarded directly to the members from the group management unit or may be returned to the mobile exchange 5, which will forward it to the members.

As indicated in Figure 3 there may be more than one group management unit 7, for example, one for messaging and one for voice sessions. Several group management units for different types of service can share the database 9, the identity means 15 and the group identification means 17.
Instead of having a separate group management unit, its functions could be implemented in the mobile exchange 5. The database, or list, could be implemented in a separate unit 9, as in Fig. 3, or included in the unit performing the analysis.

Figure 4 shows the steps carried out when a user sends a message to a group defined in the network:
- Step S11:: A sending user sends a message to a number in the network. The message is addressed to the user-specific group identifier.
- Step S12:: The message is directed to and received by a node in the network that is responsible for handling group messages. This node can be the exchange 5 or another node 7 in the network, as discussed in connection with Fig. 3.
- Step S13:: The node retrieves the user-specific group identifier from the address field of the message and determines the A-number of the sending user.
- Step S 14:: The node uses the A-number and the user-specific group identifier to determine the unique group identity, based on information found in a database or other memory means 9 comprising a table like the one shown in table 2.
- Step S15:: The node transmits the message to all members of the group.

Figure 5 shows the steps carried out when a user establishes a group connection to a group defined in the network, according to a first embodiment:
- Step S21:: A calling user makes a call to a number in the network. The number used is the user-specific group identifier of the desired group.
- Step S22:: The message is directed to and received by a node in the network that is responsible for handling group communication. This node can be the ex- change 5 or another node 7 in the network, as discussed in connection with Fig. 3.
- Step S23:: The node determines the user-specific group identifier and the A-number of the sending user.
- Step S24:: The node uses the A-number and the user-specific group identifier to determine the unique group identity, based on information found in a database or other memory means 9 comprising a table like the one shown in table 2.
- Step S25:: The node calls all members of the group except the calling user to establish a conference call. All group members who answer the call will be included in the conference call.

One disadvantage of the method shown in Figure 5 is that the sending user may have to pay for all the connections, which may become expensive. It is technically possible to distribute the cost, but this would mean that answering a call would lead to costs.

Figure 6 shows the steps carried out when a user establishes a group connection to a group defined in the network, according to a second embodiment:
- Step S31:: A calling user makes a call to a number in the network. The number used is the user-specific group identifier of the desired group.
- Step S32:: The message is directed to and received by a node in the network that is responsible for handling group communication. This node can be the exchange 5 or another node 7 in the network, as discussed in connection with Fig. 3.
- Step S33:: The node determines the user-specific group identifier and the A-number of the calling user.
- Step S34:: The node uses the A-number and the user-specific group identifier to determine the unique group identity, based on information found in a da- tabase or other memory means 9 comprising a table like the one shown in table 2.
- Step S35:: The node prompts all members of the group to connect to the conference bridge used for the conference. The sending user may be connected automatically or may connect actively. The prompt may be sent immediately or the calling user can specify a time, in step S31, at which the conference should be set up. The prompt may be in the form of an SMS message telling the users to connect. Alternatively, the prompt may be a call that is ended after only one ringing signal, which may serve as a reminder to the users.

In this way, since each user actively calls the conference bridge, each user can also be made to pay for his/her own connection.

The procedures of Figures 5 and 6 may be used for voice and video conferences and for any other type of conference session.

As discussed above, the memory function and logic functions of units 13, 15, 17 and 19 in Figure 3 can be implemented in other existing nodes in the network, or in dedicated nodes introduced in the network for this purpose. The table can be implemented in several different ways, the simplest solution being a common relational database. Of course, the database may be distributed on several databases.

## Claims

1. A method of initiating communication in a communications network from a first user in the network to a first group of users in the network, said first user being identified by a unique user identifier and each group being associated with a unique group identifier and a user-specific group identifier for each user associated with the group, said method comprising the following steps:
- initiating, by the first user, communication with a first predefined group of users by transmitting a first user-specific group identifier for the first predefined group to the network;
- determining, in the network, a unique group identifier of the first group based on the first user-specific group identifier and the unique user identifier,
- initiating communication with at least one member of the first group,
**characterised in that** the communication with the first predefined group of users is initiated by the first user sending a message intended for the first predefined group of users, said message being addressed to the first user-specific group identifier, or wherein the communication with the first predefined group of users is initiated by the first user making a call to the first user-specific group identifier.

2. A method according to claim 1, wherein said message prompts the recipient to connect to a conference call.

3. A method according to claim 1, wherein the call to the first user-specific group identifier is branched in the network to a conference call involving at least three users associated with the group.

4. A method according to any of claims 1-3, further comprising, before the step of initiating communication by the first user with a first predefined group of users, the steps of:
assigning, by the network, a user-specific group identifier for each user associated with the first predefined group, and
sending, by the network, information to each user about the assigned user-specific group identifier.

5. A method according to claim 4, wherein the network assigns a user-specific group identifier for each user associated with the first predefined group such that users who are not previously members of any other group are assigned a first user-specific group identifier, and users who are already members of other groups are assigned different user-specific group identifiers in dependence of the number of groups they are a member of.

6. A group management unit (5,7) for achieving group communication in a communications network in which at least one group of users has been defined, said group management unit comprising or being connectable to a memory means, said group management unit comprising:
receiving means (13) for receiving a communication request for communication with a first predefined group of users, said request comprising a user-specific group identifier for the first group from a sending user;
identity means (15) for determining the user identity of the sending user;
group identification means (17) for determining a unique group identification based on the user-specific group identifier and the user identity; and
transmitting means (19) for initiating communication with at least one member of said group,
**characterised in that** the receiving means (13) is arranged to receive a message addressed to the user-specific group identifier and the transmitting means (19) is arranged to transmit said message to at least one member of the first group, or wherein the receiving means (13) is arranged to receive a call set-up request to the user-specific group identifier and the transmitting means (19) is arranged to arrange a call to at least one member of the first group.

7. A group management unit according to claim 6, wherein the transmitting means (19) is arranged to return the message to a mobile exchange for forwarding to the at least one member of said group..

8. A group management unit according to claim 6, wherein the receiving means (13) is arranged to receive call set-up request to the user-specific group identifier and the transmitting means (19) is arranged to prompt at least one member of the first group to participate in the group communication.

9. A group management unit according to any of claims 6-8, which group management unit is further arranged for:
assigning a user-specific group identifier for each user associated with the first predefined group, and
sending information to each user about the assigned user-specific group identifier.

10. A group management unit according to claim 9, which is arranged for assigning a user-specific group identifier for each user associated with the first predefined group such that users who are not previously members of any other group are assigned a first user-specific group identifier, and users who are already members of other groups are assigned different user-specific group identifiers in dependence of the number of groups they are a member of.

## Patentansprüche

1. Ein Verfahren des Initiierens von Kommunikation in einem Kommunikationsnetzwerk von einem ersten Nutzer in dem Netzwerk zu einer ersten Nutzergruppe in dem Netzwerk, wobei der erste Nutzer durch einen eindeutigen Nutzerbezeichner identifiziert ist und jede Gruppe einem eindeutigen Gruppenbezeichner und einem nutzerspezifischer Gruppenbezeichner für jeden der Gruppe zugeordneten Nutzer zugeordnet ist, das Verfahren umfassend die folgenden Schritte:
- Initiieren von Kommunikation durch den ersten Benutzer mit einer ersten vordefinierten Nutzergruppe durch Übertragen eines ersten nutzerspezifischen Gruppenbezeichners für die erste vordefinierte Gruppe an das Netzwerk;
- in dem Netzwerk Bestimmen eines eindeutigen Gruppenbezeichners der ersten Gruppe basiert auf dem ersten nutzerspezifischen Gruppenbezeichner und dem eindeutigen Nutzerbezeichner,
- Initiieren von Kommunikation mit wenigstens einem Mitglied der ersten Gruppe,
**dadurch gekennzeichnet, dass** die Kommunikation mit der ersten vordefinierten Gruppe von Nutzern durch den ersten Nutzer, der eine für die erste vordefinierte Nutzergruppe beabsichtigte Nachricht sendet, initiiert wird, wobei die Nachricht an den ersten nutzerspezifischen Gruppenbezeichner adressiert ist oder wobei die Kommunikation mit der ersten vordefinierten Nutzergruppe durch den ersten Nutzer, der einen Anruf an den ersten nutzerspezifischen Gruppenbezeichner ausführt, initiiert wird.

2. Ein Verfahren nach Anspruch 1, wobei die Nachricht den Empfänger auffordert, sich mit einem Konferenzanruf zu verbinden.

3. Ein Verfahren nach Anspruch 1, wobei der Anruf zu dem ersten nutzerspezifischen Gruppenbezeichner in dem Netzwerk in einen mindestens drei der Gruppe zugeordneten Nutzer einbeziehenden Konferenzanruf aufgezweigt wird.

4. Ein Verfahren nach einem der Ansprüche 1 bis 3, ferner vor dem Schritt des Initiierens der Kommunikation durch den ersten Nutzer mit einer ersten vordefinierten Gruppe von Nutzern umfassend die Schritte:
durch das Netzwerk Zuordnen eines nutzerspezifischen Gruppenbezeichners für jeden der ersten vordefinierten Gruppe zugeordneten Nutzer, und
durch das Netzwerk Senden von Information an jeden Nutzer über die zugeordneten, nutzerspezifischen Gruppenbezeichner.

5. Ein Verfahren nach Anspruch 4, wobei das Netzwerk einen nutzerspezifischen Gruppenbezeichner für jeden der ersten vordefinierten Gruppe zugeordneten Nutzer zuordnet, so dass Nutzer, die vorher nicht Mitglieder von irgend einer anderen Gruppe waren, einem ersten nutzerspezifischen Gruppenbezeichner zugeordnet werden und Benutzer, die bereits Mitglieder von anderen Gruppen sind, einem verschiedenen, nutzerspezifischen Gruppenbezeichner in Abhängigkeit von der Anzahl der Gruppen, von denen sie ein Mitglied sind, zugeordnet werden.

6. Eine Gruppenverwaltungseinheit (5, 7) zum Erzielen von Gruppenkommunikation in einem Kommunikationsnetzwerk, in dem mindestens eine Nutzergruppe definiert worden ist, wobei die Gruppenverwaltungseinheit umfasst oder verbindbar ist mit einer Speichereinrichtung, wobei die Gruppenverwaltungseinheit umfasst:
Empfangsmittel (13) zum Empfangen einer Kommunikationsanforderung für Kommunikation mit einer ersten vordefinierten Nutzergruppe, wobei die Anforderung einen nutzerspezifischen Gruppenbezeichner für die erste Gruppe von einem sendenden Benutzer umfasst; Identitätsmittel (15) zum Bestimmen der Nutzer-Identität des sendenden Nutzers;
Gruppenidentifizierungsmittel (17) zum Bestimmen einer eindeutigen Gruppenidentifizierung basiert auf dem nutzerspezifischen Gruppenbezeichner und der Nutzer-Identität; und
Übertragungsmittel (19) zum Initiieren von Kommunikation mit wenigstens einem Mitglied der Gruppe,
**dadurch gekennzeichnet, dass** die Empfangsmittel (13) zum Empfangen einer an den nutzerspezifischen Gruppenbezeichner adressierten Nachricht ausgestaltet ist und die Übertragungsmittel (19) zum Übertragen der Nachricht an mindestens ein Mitglied der ersten Gruppe ausgestaltet sind, oder wobei die Empfangsmittel (13) zum Empfangen einer Rufaufbau-Anforderung an den nutzerspezifischen Gruppenbezeichner ausgestaltet ist und die Übertragungsmittel (19) zum Ausführen eines Anrufs zu mindestens einem Mitglied der ersten Gruppe ausgestaltet sind.

7. Eine Gruppenverwaltungseinheit nach Anspruch 6, wobei das Übertragungsmittel (19) zum Rückgeben der Nachricht an eine mobile Vermittlungsstelle zum Weiterleiten an das wenigstens eine Mitglied der Gruppe ausgeführt ist.

8. Eine Gruppenverwaltungseinheit nach Anspruch 6, wobei die Empfangsmittel (13) zum Empfangen einer Rufaufbau-Anforderung an den nutzerspezifischen Gruppenbezeichner ausgeführt ist und die Übertragungsmittel (19) zum Auffordern zur Teilnahme an der Gruppenkommunikation von wenigstens einem Mitglied der ersten Gruppe ausgeführt sind.

9. Eine Gruppenverwaltungseinheit nach einem der Ansprüche 6-8, welche Gruppenverwaltungseinheit ferner ausgeführt ist zum:
Zuordnen eines nutzerspezifischen Gruppenbezeichners für jeden der ersten vordefinierten Gruppe zugeordneten Nutzer, und
Senden von Information an jeden Nutzer über den zugeordneten nutzerspezifischen Gruppenbezeichner.

10. Eine Gruppenverwaltungseinheit nach Anspruch 9, die ausgeführt ist zum Zuordnen eines nutzerspezifischen Gruppenbezeichners für jeden mit der ersten vordefinierten Gruppe zugeordneten Nutzer, so dass Nutzer, die vorher nicht Mitglieder von irgend einer anderen Gruppe waren, dem ersten nutzerspezifischen Gruppenbezeichner zugeordnet werden, und Nutzer, die bereits Mitglied von anderen Gruppen sind, verschiedenen nutzerspezifischen Gruppenbezeichnern in Anhängigkeit von der Anzahl der Gruppen, von denen sie ein Mitglied sind, zugeordnet werden.

## Revendications

1. Procédé d'établissement d'une communication, dans un réseau de communication, entre un premier utilisateur sur le réseau et un premier groupe d'utilisateurs sur le réseau, ledit premier utilisateur étant identifié par un identificateur d'utilisateur unique et chaque groupe étant associé à un identificateur de groupe unique et un identificateur de groupe spécifique de l'utilisateur, pour chaque utilisateur associé au groupe, ledit procédé comprenant les étapes consistant à :
- faire établir, par le premier utilisateur, une communication avec un premier groupe prédéfini d'utilisateurs, en émettant sur le réseau un premier identificateur de groupe spécifique de l'utilisateur pour le premier groupe prédéfini ;
- déterminer sur le réseau un identificateur de groupe unique du premier groupe, sur la base de l'identificateur de groupe spécifique du premier utilisateur et de l'identificateur d'utilisateur unique ;
- établir la communication avec au moins un membre du premier groupe,
**caractérisé en ce que** la communication avec le premier groupe prédéfini d'utilisateurs est établie par le fait que le premier utilisateur envoie un message destiné au premier groupe prédéfini d'utilisateurs, ledit message étant adressé à l'identificateur de groupe spécifique du premier utilisateur, ou dans lequel la communication avec le premier groupe prédéfini d'utilisateurs est établie par le fait que le premier utilisateur lance un appel vers l'identificateur de groupe spécifique du premier utilisateur.

2. Procédé selon la revendication 1, dans lequel ledit message invite le destinataire à se connecter à une téléconférence.

3. Procédé selon la revendication 1, dans lequel l'appel à l'identificateur de groupe spécifique du premier utilisateur est connecté sur le réseau à une téléconférence impliquant au moins trois utilisateurs associés au groupe.

4. Procédé selon l'une quelconque des revendications 1 à 3, comprenant en outre, avant l'étape d'établissement de la communication par le premier utilisateur avec un premier groupe prédéfini d'utilisateurs, les étapes consistant à :
faire attribuer par le réseau, à chaque utilisateur associé au premier groupe prédéfini, un identificateur de groupe spécifique de l'utilisateur, et
faire émettre par le réseau des informations à chaque utilisateur sur l'identificateur de groupe spécifique de l'utilisateur qui a été attribué.

5. Procédé selon la revendication 4, dans lequel le réseau attribue à chaque utilisateur associé au premier groupe prédéfini un identificateur de groupe spécifique de l'utilisateur, si bien que les utilisateurs qui ne sont pas antérieurement membres d'un autre groupe quelconque se voient attribuer un premier identificateur de groupe spécifique de l'utilisateur et que les utilisateurs qui sont déjà membres d'autres groupes se voient attribuer des identificateurs de groupe spécifiques de l'utilisateur qui sont différents et dépendent du nombre de groupes auxquels ils appartiennent.

6. Unité de gestion de groupes (5, 7), destinée à réaliser une communication de groupe dans un réseau de communication dans lequel au moins un groupe d'utilisateurs a été défini, ladite unité de gestion de groupes comprenant un moyen de mémoire ou pouvant lui être connectée, ladite unité de gestion de groupes comprenant :
un moyen de réception (13) destiné à recevoir une demande de communication, pour une communication avec un premier groupe prédéfini d'utilisateurs, ladite demande comprenant un identificateur de groupe spécifique de l'utilisateur, pour le premier groupe, en provenance d'un utilisateur émetteur ;
un moyen d'identité (15) destiné à déterminer l'identité d'utilisateur de l'utilisateur émetteur ;
un moyen d'identification de groupe (17) destiné à déterminer une identification unique de groupe sur la base de l'identificateur de groupe spécifique de l'utilisateur et de l'identité de l'utilisateur ; et
un moyen d'émission (19) destiné à établir la communication avec au moins un membre dudit groupe,
**caractérisée en ce que** le moyen de réception (13) est conçu pour recevoir un message adressé à l'identificateur de groupe spécifique de l'utilisateur et le moyen d'émission (19) est conçu pour émettre ledit message vers au moins un membre du premier groupe, ou dans laquelle le moyen de réception (13) est conçu pour recevoir une demande d'établissement d'appel vers l'identificateur de groupe spécifique de l'utilisateur et le moyen d'émission (19) est conçu pour établir un appel vers au moins un membre du premier groupe.

7. Unité de gestion de groupes selon la revendication 6, dans laquelle le moyen d'émission (19) est conçu pour renvoyer le message à un central mobile pour qu'il soit transféré audit au moins un membre dudit groupe.

8. Unité de gestion de groupes selon la revendication 6, dans laquelle le moyen de réception (13) est conçu pour recevoir une demande d'établissement d'appel vers l'identificateur de groupe spécifique de l'utilisateur et le moyen d'émission (19) est conçu pour inviter au moins un membre du premier groupe à participer à la communication de groupe.

9. Unité de gestion de groupes selon l'une quelconque des revendications 6 à 8, ladite unité de gestion de groupes étant en outre conçue pour :
attribuer un identificateur de groupe spécifique de l'utilisateur à chaque utilisateur associé au premier groupe prédéfini, et
envoyer à chaque utilisateur des informations sur l'identificateur de groupe spécifique de l'utilisateur.

10. Unité de gestion de groupes selon la revendication 9, qui est conçue pour attribuer à chaque utilisateur associé au premier groupe prédéfini un identificateur de groupe spécifique de l'utilisateur, si bien que les utilisateurs qui ne sont pas antérieurement membres d'un autre groupe quelconque se voient attribuer un premier identificateur de groupe spécifique de l'utilisateur et que les utilisateurs qui sont déjà membres d'autres groupes se voient attribuer des identificateurs de groupe spécifiques de l'utilisateur qui sont différents et dépendent du nombre de groupes auxquels ils appartiennent.
